(19) Europäisches Patentamt / European Patent Office / Office européen des brevets

(11) **EP 4 290 908 A1**

(12) **EUROPEAN PATENT APPLICATION**
published in accordance with Art. 153(4) EPC

(43) Date of publication:
**13.12.2023 Bulletin 2023/50**

(21) Application number: **21927268.9**

(22) Date of filing: **26.02.2021**

(51) International Patent Classification (IPC):
**H04W 16/10** (2009.01)      **H04W 28/26** (2009.01)
**H04W 72/12** (2023.01)

(52) Cooperative Patent Classification (CPC):
**H04W 16/10; H04W 28/26; H04W 72/12**

(86) International application number:
**PCT/CN2021/078152**

(87) International publication number:
**WO 2022/178831 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventor: **ZHOU, Kai
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **RADIO RESOURCE SCHEDULING METHOD AND DEVICE**

(57) This application provides a radio resource scheduling method and device. The method includes: A first device receives first information from a second device, where the first information is used to request data transmission of a first service. The first device sends second information to the second device when an available continuous resource does not meet a data transmission requirement of the first service, where the second information includes information about first time, the information about the first time indicates to perform data transmission of the first service after the first time, and the available continuous resource is a resource needed for continuously transmitting data that is of the first service and that is requested to be transmitted. In this way, a network side may implement overall monitoring, scheduling of a network resource, and control of a data transmission behavior of a terminal, to improve data transmission efficiency of the terminal.

Method 100

FIG. 3

**Description**

**TECHNICAL FIELD**

This application relates to the communication field, and more specifically, to a radio resource scheduling method and device.

**BACKGROUND**

When performing data transmission, a terminal first applies to a base station for a resource, and then immediately performs data transmission via a communication module (for example, a 5G module). A resource that may be scheduled by the base station for the terminal is limited, and resource contention is caused when a plurality of terminals perform data transmission on the resource scheduled by the base station. For example, in a 5G industrial scenario, each terminal needs to upload a picture captured by a local industrial camera to a cloud or a mobile edge computing (mobile edge computing, MEC) application for inference. A plurality of terminals share an uplink bandwidth, causing a slow data transmission rate of each terminal. Consequently, a production periodicity of each terminal is prolonged, and overall production efficiency is reduced. That is, in the conventional technology, data transmission efficiency is low and production efficiency is affected.

Therefore, how to ensure data transmission efficiency of a terminal is a problem that needs to be resolved currently.

**SUMMARY**

This application provides a radio resource scheduling method and device. A network side may implement overall monitoring, scheduling of a network resource, and control of a data transmission behavior of a terminal, to improve data transmission efficiency of the terminal.

According to a first aspect, a radio resource scheduling method is provided. The method includes: A first device receives first information from a second device, where the first information is used to request data transmission of a first service; and the first device sends second information to the second device when an available continuous resource does not meet a data transmission requirement of the first service, where the second information includes information about first time, the information about the first time indicates to perform data transmission of the first service after the first time, and the available continuous resource is a resource needed for continuously transmitting data that is of the first service and that is requested to be transmitted.

Based on the foregoing technical solution, the second device may first send the first information to the first device to request to perform data transmission. The first device may determine whether the available continuous resource meets the data transmission requirement of the first service, and determine waiting time of the second device. The network side may implement overall monitoring, scheduling of a network resource, and control of a data transmission behavior of a terminal, to improve data transmission efficiency of the terminal.

It should be noted that the available continuous resource in this application is the resource needed for continuously transmitting the data that is of the first service and that is requested to be transmitted. In an example, the available continuous resource may alternatively be understood as a resource allocated by the first device to data transmission of a service of a terminal device (which is an example of the second device). Certainly, the first device may also allocate, to services of a plurality of terminal devices, respective available continuous resources that belong to the plurality of terminal devices. In other words, the available continuous resource in this application may be a service data transmission resource specially allocated by the first device to the second device, and there may be a plurality of second devices in this application.

In an implementation, the first device may obtain a resource from a base station.

In an implementation, the first device may be a mobile edge enable service, and the second device may be a terminal device.

With reference to the first aspect, in some implementations, the first information includes information about a size of data that is of the first service and that is transmitted by the second device and/or channel quality information. The channel quality information includes at least one of the following: reference signal received quality, reference signal received power, or a signal to interference plus noise ratio.

In other words, when the second device sends the first information to the first device, the first information may further include the information about the size of the data of the first service and/or the channel quality information, so that the first device determines, based on the first information, the available continuous resource, or estimate information such as or a transmission rate of the second device or the first information.

With reference to the first aspect, in some implementations, the method further includes: The first device determines the available continuous resource; and the first device determines, based on the available continuous resource and the first information, whether the data transmission requirement of the first service is met.

In other words, the first device may determine, based on the first information, whether the current available continuous resource meets the data transmission requirement of the first service.

With reference to the first aspect, in some implementations, the method further includes: The first device determines the information about the first time based on a first parameter. The first parameter includes a rate of data transmitted by a third device and/or channel quality. The third device includes a device that is performing data transmission and/or a device that has waited for data transmission.

In other words, when the first device determines whether to enable the second device to perform data transmission, a system available continuous resource and a transmission state of service data of another terminal need to be considered simultaneously, to improve the data transmission efficiency of the terminal.

In an implementation, the first device may determine, based on a system available resource and a current channel state, whether to enable a terminal device to perform data transmission. In an implementation, the first device may determine, by using the system available continuous resource and a data transmission state of another terminal, whether to enable a terminal device to perform data transmission. This may implement overall monitoring, scheduling of the network resource, and control of the data transmission behavior of the terminal, to improve data transmission efficiency of the terminal.

With reference to the first aspect, in some implementations, the method further includes: sending third information to the second device when the available continuous resource meets the data transmission requirement of the first service, where the third information indicates that data transmission of the first service is allowed.

In other words, the second device may be allowed to perform data transmission when the second device determines that a current system has the available continuous resource.

In an implementation, after sending the first information to the first device, the second device determines that the current system available continuous resource meets the data transmission requirement of the first service of the second device. In this case, the first device may send the third information to the second device, to allow data transmission of the first service. In another implementation, after sending the first information to the first device, the second device determines that the current system available continuous resource does not meet the data transmission requirement of the first service of the second device. In this case, the first device may send the second information to the second device, and estimate the waiting time of the second device. Once the first device finds that the current system available continuous resource meets the data transmission requirement of the first service, the first device may send the third information to the second device, to allow data transmission of the first service. It should be noted that, in this case, the second device may perform data transmission before the waiting time arrives. Based on this, the first device may implement overall monitoring, scheduling of the network resource, and control of the data transmission behavior of the terminal, to improve data transmission efficiency of the terminal device.

According to a second aspect, a radio resource scheduling method is provided. The method includes: A second device sends first information to a first device, where the first information is used to request data transmission of a first service; and the second device receives second information from the first device, where the second information includes information about first time, the information about the first time indicates to perform data transmission of the first service after the first time, and an available continuous resource is a resource needed for continuously transmitting data that is of the first service and that is requested to be transmitted.

Based on the foregoing technical solution, the second device may first send the first information to the first device to request to perform data transmission. The first device may determine whether the available continuous resource meets the data transmission requirement of the first service, and determine waiting time of the second device. The network side may implement overall monitoring, scheduling of a network resource, and control of a data transmission behavior of a terminal, to improve data transmission efficiency of the terminal.

With reference to the second aspect, in some implementations, the first information includes information about a size of data transmitted by the second device and/or channel quality information. The channel quality information includes at least one of the following: reference signal received quality, reference signal received power, or a signal to interference plus noise ratio.

With reference to the second aspect, in some implementations, the second device receives third information from the first device. The third information indicates that data transmission of the first service is allowed.

According to a third aspect, this application further provides a radio resource scheduling device, including modules or units configured to perform the method according to any one of the possible implementations of the first aspect.

According to a fourth aspect, this application provides a radio resource scheduling device, including modules or units configured to perform the method according to any one of the possible implementations of the second aspect.

According to a fifth aspect, a radio resource scheduling device is provided, including a processor. The processor is coupled to a memory, and may be configured to execute instructions in the memory, to implement the method according to any one of the possible implementations of the first aspect. Optionally, the device further includes the memory. Optionally, the device further includes a communication interface, and the processor is coupled to the communication interface.

Optionally, the transceiver may be a transceiver circuit. Optionally, the input/output interface may be an input/output circuit. The processor may be a processing circuit. Optionally, the input/output interface may be an input/output circuit.

According to a sixth aspect, a radio resource scheduling device is provided, including a processor. The processor is coupled to a memory, and may be configured to execute instructions in the memory, to implement the method according to any one of the possible implementations of the second aspect. Optionally, the device further includes the memory. Optionally, the device further includes a communication interface, and the processor is coupled to the communication interface.

Optionally, the transceiver may be a transceiver circuit. Optionally, the input/output interface may be an input/output circuit. The processor may be a processing circuit. Optionally, the input/output interface may be an input/output circuit.

According to a seventh aspect, a processor is provided. The processor includes an input circuit, an output circuit, and a processing circuit. The processing circuit is configured to: receive a signal through the input circuit, and transmit a signal through the output circuit, so that the processor performs the method according to any one of the possible implementations of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing device is provided, including a processor and a memory. The processor is configured to read instructions stored in the memory, and may receive a signal through a receiver, and transmit a signal through a transmitter, to perform the method according to any one of the possible implementations of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing device in the eighth aspect may be one or more chips. The processor in the processing device may be implemented by hardware, or may be implemented by software. When being implemented by hardware, the processor may be a logic circuit, an integrated circuit, or the like. When being implemented by software, the processor may be a general-purpose processor, and is implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method according to any one of the possible implementations of the first aspect and the second aspect.

According to a tenth aspect, a computer-readable medium is provided. The computer-readable medium stores a computer program (which may also be referred to as code or instructions). When the computer program is run on a computer, the computer is enabled to perform the method according to any one of the possible implementations of the first aspect and the second aspect.

According to an eleventh aspect, a chip is provided, including at least one processor and a communication interface. The communication interface is configured to: receive a signal from another radio resource scheduling device other than the radio resource scheduling device and transmit the signal to the processor, or send a signal from the processor to another radio resource scheduling device other than the radio resource scheduling device. The processor is configured to implement the method according to any one of the possible implementations of the first aspect or the second aspect by using a logic circuit or executing code instructions.

According to a twelfth aspect, a radio resource scheduling system is provided, including the foregoing first device and second device.

According to the method and the device provided in this application, the network side may implement overall monitoring, scheduling of the network resource, and control of the data transmission behavior of the terminal, to improve data transmission efficiency of the terminal.

## BRIEF DESCRIPTION OF DRAWINGS

FIG. 1 is a schematic diagram of a scenario to which an embodiment of this application is applicable;

FIG. 2 is a schematic diagram of another scenario to which an embodiment of this application is applicable;

FIG. 3 is a schematic diagram of a radio resource scheduling method according to an embodiment of this application;

FIG. 4 is a schematic diagram of a radio resource scheduling method according to an embodiment of this application;

FIG. 5 is a schematic diagram of a radio resource scheduling method according to an embodiment of this application;

FIG. 6 is a schematic diagram of a radio resource scheduling device according to an embodiment of this application; and

FIG. 7 is a schematic diagram of a radio resource scheduling device according to an embodiment of this application.

## DESCRIPTION OF EMBODIMENTS

The following describes technical solutions of this application with reference to accompanying drawings.

A wireless communication system mentioned in embodiments of this application includes but is not limited to a global system for mobile communications (global system for mobile communications, GSM), a long term evolution (long term evolution, LTE) frequency division duplex (frequency division duplex, FDD) system, an LTE time division duplex (time division duplex, TDD) system, an LTE system, a long term evolution advanced (LTE-Advanced, LTE-A) system, a wireless local area network (wireless local area network, WLAN) communications system, for example, wireless fidelity (wireless fidelity, Wi-Fi) system, a next-generation communication system (for example, a 6G communication system), a converged system of a plurality of access systems, or an evolved system.

A terminal device in embodiments of this application may include various access terminals, mobile devices, user terminals, or user equipment that has a wireless communication function. For example, the terminal device in this application may be a virtual reality (virtual reality, VR) terminal device, an augmented reality (augmented reality, AR) terminal device, a wireless terminal in industrial control (industrial control), a machine type communication (machine type communication, MTC) terminal, customer premises equipment (customer premise equipment, CPE), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), or a wireless terminal in a smart home (smart home). Application scenarios in embodiments of this application are applicable to application scenarios such as a 5G industrial terminal and unmanned aerial vehicle driving. In this application, the foregoing terminal device and a chip that may be disposed in the foregoing terminal device are collectively referred to as a terminal device.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, such as smart watches or smart glasses, and include devices that focus on only one type of application function and need to collaboratively work with other devices such as smartphones, such as various smart bands, or smart jewelry for monitoring physical signs.

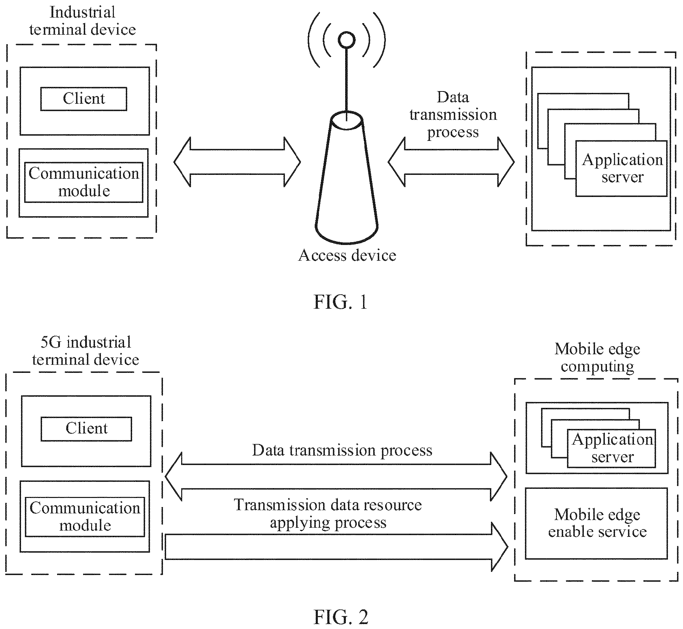

FIG. 1 is a schematic diagram of an application scenario of an embodiment of this application. As shown in FIG. 1, for example, in a 5G industrial scenario, when each terminal needs to perform data transmission, the terminal first applies to a base station for a bandwidth resource, and then immediately performs data transmission via a communication module (for example, a 5G module). However, a bandwidth resource scheduled by the base station for the terminal is fixed, and resource contention is caused when a plurality of terminals simultaneously start to perform data transmission on the fixed resource scheduled by the base station. For example, in a scenario such as high-definition video surveillance, machine vision quality inspection, or visual navigation, each terminal performs different tasks. Each terminal needs to upload a picture captured by a local industrial camera to a cloud or a mobile edge computing (mobile edge computing, MEC) application for inference. These terminals share an uplink bandwidth. If the uplink bandwidth is insufficient, working time of each terminal is increased, take time is increased. Consequently, a production periodicity of each terminal is prolonged, and overall production efficiency is reduced. The take time in this application may be understood as a time interval between various work types in a production process. For example, in a pipeline operation, the take time is also time from producing a product to producing a next product. The take time may be adjusted within a specific range as required. Shorter take time indicates a faster pipeline speed and higher industrial production efficiency.

It is assumed that there are five terminals: a terminal #1, a terminal #2, a terminal #3, a terminal #4, and a terminal #5. It is assumed that take time of the five terminals are respectively 2 seconds, 3 seconds, 3 seconds, 3 seconds, and 2 seconds. A system bandwidth (for example, a bandwidth of a base station in a factory in a 5G network) may support concurrent data transmission of at most four terminals. In this case, at a moment of a common multiple of the take time, a take time conflict inevitably occurs. In this case, a shared resource needed by the terminals is insufficient. It should be understood that a smaller system bandwidth and a larger quantity of terminals in a factory indicate a higher probability of generating a take time conflict. Consequently, a working periodicity of each terminal becomes longer, and overall production efficiency is reduced. It should be noted that, the bandwidth in this application may be an amount of data transmitted on a line in unit time (where a granularity is second). In the 5G industrial scenario, a finer granularity, for example, 10 Mb/(100 ms), is needed for bandwidth usage. In this way, a data transmission rate and the production efficiency can be improved.

Usually, when the shared resource needed by the terminal is insufficient and network congestion (network congestion) occurs, an additive-increase/multiplicative-decrease (additive-increase/multiplicative-decrease, AIMD) policy is used to perform congestion control. The AIMD policy is simply referred to as "additive-increase/multiplicative-decrease". In other words, once packet loss occurs in a network due to congestion, a quantity of data packets sent by the terminal is halved immediately and the terminal performs backoff, to reserve sufficient resources for another new service. To be specific, a quantity of data packets on the network at a same moment is constant. A "new" data packet can be sent to the network only after an "old" data packet leaves the network. However, such an active backoff policy of the terminal causes a transmission rate of the terminal to decrease rapidly. Consequently, data sending efficiency of a single terminal is reduced, and the production efficiency is seriously affected.

It may be learned that the resource that may be scheduled by the base station for the terminal is limited. Provided that there is data, each terminal performs data transmission. This severely affects data transmission efficiency and user experience. For example, in the 5G industrial scenario, the following case is usually encountered: Although a plurality of terminals simultaneously upload files, a transmission rate is very low. This severely affects the production efficiency.

FIG. 2 is a schematic diagram of a system framework to which an embodiment of this application is applicable. As shown in FIG. 2, the system framework may include a 5G industrial terminal device and a mobile edge computing (mobile edge computing, MEC) network element. The MEC network element may further include various application servers and MEES servers.

This application provides a radio resource scheduling method, and a mobile edge enable service (mobile edge enable service, MEES) is introduced into a network side MEC network element. In this embodiment of this application, a system resource scheduled and managed by the MEES is obtained from a base station. For example, in an industrial scenario, the system resource scheduled and managed by the MEES may be a resource used by a Wi-Fi access point (access point, AP). In addition, it should be noted that the MEES in this embodiment of this application may control a data sending behavior of a terminal. For example, a software development kit (software development kit, SDK) may be installed on each terminal, so that the MEES can control a data transmission behavior of the terminal. In addition, the MEES in this embodiment of this application may implement overall monitoring on bandwidth resource usage and the data transmission behavior of the terminal. In other words, the MEES may actively discover and manage a total bandwidth resource in a system, discover and control the data sending behavior of the terminal, and allocate an available bandwidth resource to the terminal for global scheduling. The terminal sends data based on resource scheduling of the MEES, so that data transmission efficiency and production efficiency are improved.

For example, the MEES in this embodiment of this application may store and manage the resource of the base station or the Wi-Fi AP. Alternatively, the MEES may record transmission rates for latest N times and a historical maximum transmission rate of each terminal. It should be understood that if the MEES detects that a terminal performs data transmission for the 1st time, the MEES may register the terminal and record a transmission rate of the terminal. N herein may be a preset value, for example, N is 5. Certainly, if a terminal is still in a deregistered state in M or more active time periods (life time), the MEES may clear a transmission rate record of the terminal. M herein may also be a preset value or range, for example, M may be 10. It should be understood that a person skilled in the art may set a value of N or M based on an actual situation. This is not limited in this application.

The MEES in this embodiment of this application may be integrated into the MEC network element, or may exist independently. For example, the MEES may be deployed in a data center or a private cloud (private cloud). A location at which the MEES is deployed is not limited in this application.

It should be noted that the MEES in this embodiment of this application is different from a radio access network device such as a base station. The base station or the radio access network device cannot control the data sending behavior of the terminal. Therefore, on a resource scheduled by the base station, the terminal performs data transmission via a communication module when the terminal has data to send. However, the MEES in this embodiment of this application may discover and control the data sending behavior of the terminal.

It should be further noted that, in this embodiment of this application, the 5G industrial terminal scenario is used as an example for description. This should not constitute a limitation on this application. This application does not exclude that the method provided in embodiments of this application may be used in another scenario, for example, a scenario of unmanned driving or an unmanned aerial vehicle.

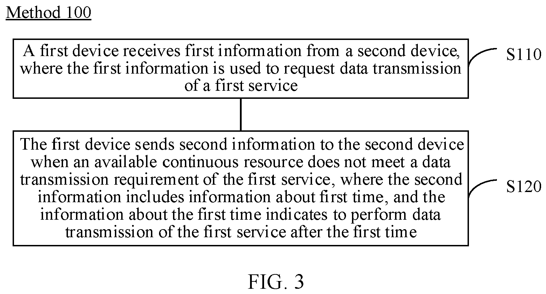

FIG. 3 is a schematic diagram of a radio resource scheduling method 100 according to this application. The method includes S110 and S 120. The following describes each step in detail.

Step S 110: A first device receives first information from a second device. The first information is used to request data transmission of a first service.

In other words, the second device may first send the first information to the first device, to request data transmission of the first service. In a possible implementation, a terminal device may request, from the first device, a bandwidth resource needed for data transmission of the first service.

In a possible implementation, the first information may further include information about a size of data that is of the first service and that is transmitted by the second device and/or channel quality information. The channel quality information includes at least one of the following: reference signal received quality, reference signal received power, or a signal to interference plus noise ratio.

Step S 120: The first device sends second information to the second device when an available continuous resource does not meet a data transmission requirement of the first service. The second information includes information about first time, and the information about the first time indicates to perform data transmission of the first service after the first time.

It should be noted that the available continuous resource in this application is a resource needed for continuously transmitting the data that is of the first service and that is requested to be transmitted. In an example, the available continuous resource may alternatively be understood as a resource allocated by the first device to data transmission of a service of a terminal device (which is an example of the second device). Certainly, the first device may also allocate, to services of a plurality of terminal devices, respective available continuous resources that belong to the plurality of terminal devices. In other words, the available continuous resource in this application may be a service data transmission resource specially allocated by the first device to the second device, and there may be a plurality of second devices in this application.

In a possible implementation, the first device may first determine the available continuous resource. For example, the first device may determine a current available continuous resource based on a current system resource and a resource occupied by a terminal that is performing data transmission. Then, the first device determines, based on the available continuous resource and an amount of the data that is transmitted by the second device, whether the data transmission requirement of the first service is met.

In a possible implementation, the first device may send the second information to the second device when the first device determines that the current available continuous resource does not meet the data transmission requirement of the first service. The second information includes waiting time. In other words, the first device pre-calculates needed waiting time of the second device when the first device determines that the current available continuous resource does not meet the data transmission requirement of the first service. For example, the first device may estimate the waiting time of the second device based on a rate of data transmitted by the third device and/or channel quality. The third device may be a device that is performing data transmission and/or a device that has waited for data transmission.

In a possible implementation, the first device may send third information to the second device when the first device determines that the available continuous resource meets the data transmission requirement of the first service. The third information indicates that data transmission of the first service is allowed.

According to the method provided in this application, the first device may determine, based on usage of the system resource, whether the second device may perform data transmission currently, and control a data transmission behavior of a service of the second device, so that data transmission efficiency of the second device can be ensured. Therefore, production efficiency is improved.

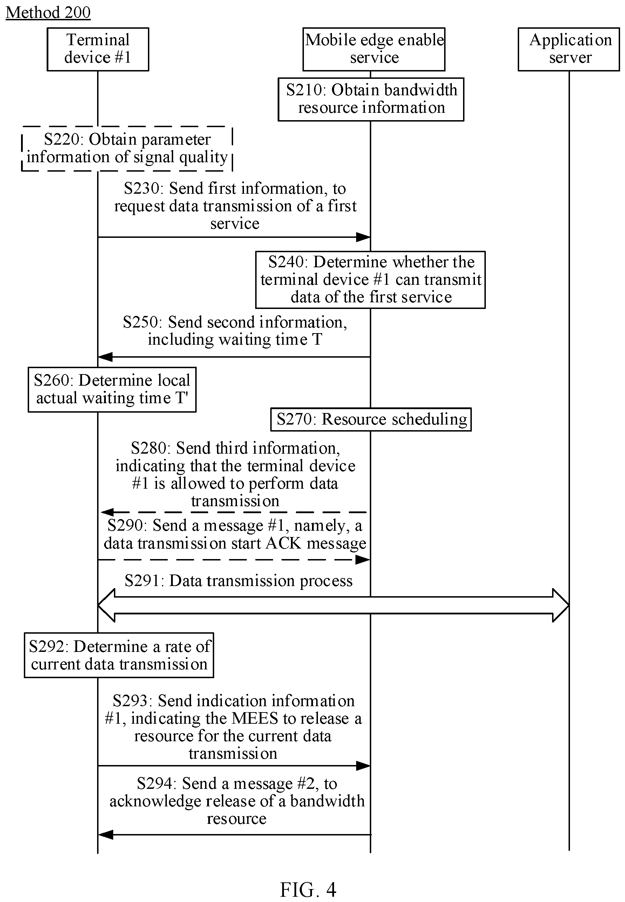

FIG. 4 is a schematic flowchart of a radio resource scheduling method 200 according to an embodiment of this application. In this embodiment of this application, an MEES is used as an example of a first device for description, and a terminal device #1 is used as an example of a second device for description. An example in which the terminal device #1 transmits a first service is used for description. Before performing data transmission, the terminal device #1 may first send request information to the MEES, to request data transmission of the first service. The MEES may determine, based on usage of a current system resource, whether the terminal device #1 can currently transmit data of the first service, and the MEES sends second information to the terminal device #1. The terminal device #1 perform data transmission at proper time based on the second information sent by the MEES. According to the method in this embodiment, data transmission efficiency of a terminal service can be ensured. Therefore, production efficiency is improved. In the method 200 shown in FIG. 4, the method includes steps S210 to S294, and the following describes each step in detail.

Step S210: The MEES obtains a bandwidth resource from a network device.

In an implementation, the MEES may obtain bandwidth resource information from an access network device. For example, the MEES may obtain the bandwidth resource information via a network management system of a base station, the MEES may directly obtain the bandwidth resource information through a resource management channel between the MEES and a base station, or the MEES may configure, through an interface or a human-machine interaction interface, a bandwidth resource obtained from a base station.

In this embodiment of this application, a system resource scheduled and managed by the MEES may be obtained from the base station. For example, in an industrial scenario, the system resource scheduled and managed by the MEES is equivalent to a bandwidth resource of a factory.

In some embodiments, step S220 may be included: The terminal device #1 obtains parameter information of current signal quality.

It should be noted that the terminal device obtains the parameter information of the signal quality to obtain a real-time channel state, and then may report the channel state to the MEES. The MEES may estimate a transmission rate of the terminal device based on the channel state.

The parameter information of the signal quality may include reference signal received quality (reference signal received quality, RSRQ). The RSRQ means a signal-to-noise ratio and an interference level of current channel quality, and is not only related to power of a resource element (resource element, RE) carrying a reference signal, but also related to power of an RE carrying user data and interference of a neighboring cell. Therefore, the RSRQ changes with a network payload and interference. A larger network payload indicates greater interference and a smaller RSRQ measurement value. The parameter information of the signal quality may further include reference signal received power (reference signal received power, RSRP). The RSRP is a key parameter representing a radio signal strength, reflects a path loss strength of a current channel, and is for cell coverage measurement and cell selection or reselection. The parameter information of the signal quality may further include a signal to interference plus noise ratio (signal to interference plus noise ratio, SINR). The SINR is a ratio of a strength of a received useful signal to a strength of a received interference signal (noise and interference), and may be simply understood as a signal-to-noise ratio.

It should be understood that the parameter information of the signal quality is merely an example, and the parameter information of the signal quality is not limited in this embodiment of this application.

In a possible implementation, the terminal device #1 may measure a downlink channel state information reference signal (channel state information reference signal, CSI-RS) in real time, to obtain the parameter information of the current signal quality.

Specifically, the terminal device #1 may periodically obtain the parameter information of the signal quality from a communication module of the terminal. In a possible implementation, the terminal device #1 may send a request message to the terminal module to request the parameter information of the signal quality, and then the terminal module sends a response message to the terminal device #1. The response message includes the parameter information of the signal quality. In another possible implementation, the communication module of the terminal may alternatively regularly send the parameter information of the signal quality to the terminal device #1.

It should be understood that the terminal device #1 may also store parameter information of a signal quality state.

Step S230: The terminal device #1 may send first information to the MEES. The first information is used to request data transmission of the first service.

In a possible implementation, when the terminal device #1 needs to perform data transmission, the terminal device #1 may first send the first information to the MEES, to request a resource for data transmission of the first service. The first information may include the parameter information of the signal quality state, for example, RSRP, RSRQ, and an SINR. The first information may further include an amount of data that is to be transmitted. The first information may further include a moment T1 at which the terminal device #1 sends the first information to the MEES.

Step S240: The MEES receives the first information sent by the terminal, to determine whether the terminal device #1 can perform data transmission of the first service.

In a possible implementation, after receiving the first information sent by the terminal device #1, the MEES may determine an available continuous resource in a system. The MEES determines that the terminal device #1 cannot perform data transmission in a waiting time period when the available continuous resource does not meet a data transmission requirement of the first service.

In a possible implementation, after receiving the first information sent by the terminal device #1, the MEES may determine an available continuous resource in a system. The MEES determines to allow the terminal device #1 to immediately perform data transmission when the available continuous resource meets a data transmission requirement of the first service.

As described above, the available continuous resource in this application is a resource needed for continuously transmitting the data that is of the first service and that is requested to be transmitted. In an example, the available continuous resource may alternatively be understood as a resource allocated by the MEES to data transmission of the first service of the terminal device #1. Certainly, the MEES may also allocate, to services of a plurality of terminal devices, respective available continuous resources that belong to the plurality of terminal devices. In other words, the available continuous resource in this application may be a service data transmission resource specially allocated by the MEES to the terminal device, and there may be a plurality of terminal devices in this application.

In some embodiments, the MEES may further determine, based on a bandwidth resource currently in the system, a resource occupied by a terminal that is performing data transmission, and an amount of data transmitted by the terminal device #1, whether the resource currently in the system can be used by the terminal device #1 to perform data transmission.

In other words, in this embodiment of this application, when determining whether the terminal device #1 can perform data transmission, the MEES may consider both the current reserved available continuous resource in the system and resource usage of another terminal during data transmission.

For example, the MEES may comprehensively determine, based on a system available resource, an estimated transmission rate of a terminal device (for example, a terminal device A) that is currently performing data transmission or a terminal device (for example, a terminal device B) that has performed queuing, and current channel quality, that the terminal device #1 cannot perform data transmission.

For another example, the MEES may comprehensively determine, based on a system available resource, an estimated transmission rate of a terminal device (for example, a terminal device A) that is currently performing data transmission or a terminal device (for example, a terminal device B) that has performed queuing, and current channel quality, that the terminal device #1 can perform data transmission. In this case, the MEES may send a message to the terminal device #1 to notify the terminal device to perform data transmission.

Case 1:

If the MEES determines, based on a bandwidth resource currently in the system, the resource occupied by the terminal that is performing data transmission, and the amount of data transmitted by the terminal device #1, that the available continuous resource does not meet the data transmission requirement of the first service. For example, the current resource in the system is insufficient to transmit the data of the first service of the terminal device #1, the MEES may determine to enable the terminal device #1 to stop performing data transmission in a first time period (which is an example of information about the first time). In other words, the terminal device #1 needs to wait for a period of time before performing data transmission. Specifically, the MEES may estimate, based on parameters such as a stored historical transmission speed and current signal quality of the terminal device, the transmission rate of the terminal device (for example, the terminal device A) that is currently performing data transmission or the terminal device (for example, the terminal device B) that has performed queuing, to determine duration $T$ for which the terminal device #1 needs to wait to perform data transmission.

It should be noted that the parameter $T$ in this embodiment of this application is equivalent to a parameter of a waiting timer. In other words, the parameter $T$ indicates duration for which the terminal waits for data transmission.

It should be understood that, in this embodiment of this application, a terminal that has performed queuing may be a terminal device that has waited for data transmission.

It should be understood that the MEES may alternatively determine, based on the calculated waiting duration $T$ of the terminal device #1, a moment at which the terminal device #1 performs data transmission, and then send, to the terminal device #1, information about the calculated moment at which the terminal device #1 performs data transmission.

For example, the MEES estimates, based on a signal quality parameter, that the current channel state is good. However, it is found, based on historically stored information, that a historical transmission rate of the terminal device A or the terminal device B is low, and the MEES estimates that the transmission rate of the terminal device #A and the transmission rate of the terminal device B are higher than the historical transmission rates. It should be noted that the terminal device A and the terminal device B herein each may include a plurality of terminal devices. In other words, there may be a plurality of terminal devices that are currently performing data transmission or a plurality of terminal devices that have performed queuing. The transmission rate estimated by the MEES may be an average value. For example, the MEES sets that at most 10 terminals may simultaneously start to perform data transmission. In this case, the MEES may estimate an average transmission rate of a terminal device A1, a terminal device A2, a terminal device A3, ..., and a terminal device A10. Similarly, for the terminal B that has performed queuing, the MEES may also estimate an average transmission rate of a terminal device B1, a terminal device B2, a terminal device B3, ..., and a terminal device B10, and then calculate duration $T$ for which the terminal device #1 needs to wait to perform data transmission. For example, currently, there are 10 terminal devices that are performing data transmission, and data transmission takes 100 ms; and there are 10 terminal devices that wait for data transmission, and data transmission takes 80 ms. It is assumed that the terminal device #1 in this embodiment is the 21st terminal device. In this case, the MEES may determine, by calculating time needed for first 20 terminal devices to perform data transmission, that duration $T$ for which the terminal device #1 should wait to perform data transmission is 180 ms.

It should be noted that, for ease of understanding, the foregoing is merely an example, and should not constitute any limitation on this application.

It should be understood that the terminal device and the MEES may alternatively preset a service priority. For example, when detecting that data of a service currently transmitted by the terminal device #1 is an emergency service, the MEES may preferentially enable the terminal device #1 to perform data transmission.

Step S250: The MEES sends second information to the terminal device #1. The second information includes waiting duration $T$ (which is an example of the information about the first time).

In a possible implementation, the MEES sends the second information to the terminal device #1. The second information includes $T$. In this case, the parameter $T$ is not 0. The second information may further include parameters such as a moment T2 at which the MEES receives the first information sent by the terminal, and a moment T3 at which the MEES sends the second information.

It should be noted that the waiting duration $T$ calculated by the MEES in this embodiment of this application may be duration that is calculated by the MEES from the moment T2 at which the MEES receives the first information sent by the terminal and that the terminal device #1 should wait for. That is, in this case, the MEES calculates the waiting duration $T$ from T2. That the MEES calculates the waiting duration $T$ from T2 is pre-agreed on by the terminal device and a network side. Certainly, a person skilled in the art may alternatively set, based on an actual situation, a start moment at which the MEES calculates the waiting duration $T$ of the terminal device #1.

Step S260: The terminal device receives the second information, to determine local actual waiting duration $T'$.

It should be noted that the terminal device #1 may calculate a time offset based on a moment T4 at which the second information is received, T1, T2, and T3, and generate new waiting duration, namely, $T'$. In other words, $T'$ is duration $T'$ that is calculated by the terminal device #1 and that the terminal device #1 should actually wait for from the moment T2 at which the terminal device locally receives, from the MEES, the first information sent by the terminal device #1.

For example, in this embodiment of this application, T1 is the moment at which the terminal device #1 sends the first information, T2 is the moment at which the network side MEES receives the first information sent by the terminal device #1, T3 is the moment at which the MEES sends the second information to the terminal device #1, and T4 is the moment at which the terminal device #1 receives the second information. Because an MEES server calculates the waiting duration $T$ of the terminal device #1 from T2, but a moment at which the MEES sends the waiting duration $T$ is T3, there is a time delay, that is, $\Delta T_1 = T3\text{-}T2$. Therefore, after receiving the second information, the terminal device #1 needs to calculate the actual waiting duration $T'$.

In addition, when the MEES and the terminal device are not synchronized in time, the terminal device #1 also needs to correct the time. For example, the terminal device may first calculate the time offset

$$\Delta T_2 = \frac{(T2-T1)+(T3-T4)}{2}$$ based on T1, T2, T3, and T4, and then determine the actual waiting time $T'$ based on the time offset $\Delta T$ and $T$ pre-calculated by the MEES.

For example, the terminal device #1 may first calculate $\Delta T_1$, then calculate the time offset

$$\Delta T_2 = \frac{(T2-T1)+(T3-T4)}{2}$$ based on T1, T2, T3, and T4, and then determine the actual waiting time $T'$ based on the waiting time $T$ pre-calculated by the MEES, where $T'=T\text{-}\Delta T_1\text{-}\Delta T_2$.

It should be understood that, if a problem of asymmetric uplink and downlink paths is not considered, $T$ may be calculated according to the foregoing formula. However, usually, downlink transmission is usually faster. In this case, based on consideration of asymmetric uplink and downlink delays, $T'$ may be calculated according to the following formula: $T'=T\text{-}\Delta T_1 \text{-}\alpha\Delta T_2$, where $\alpha$ may be 0.5.

It should be understood that, in this embodiment, that the terminal device #1 determines, by using the foregoing time offset method, the actual waiting duration $T'$ is merely an example, and should not be construed as any limitation on this application. The terminal device #1 may alternatively calculate the time offset by using another algorithm, to determine the actual waiting duration.

It should be understood that the terminal device #1 may alternatively calculate, based on the calculated actual waiting duration, an actual data transmission moment.

It should be understood that, if the MEES sends information about the data transmission moment of the terminal device #1, the terminal device #1 also needs to recalculate an actual data transmission moment.

Step S270: The MEES performs resource scheduling.

Specifically, the MEES may find, based on a current queue of each terminal, a time domain point of a latest available resource, to calculate time for which the terminal device should wait, and switch a corresponding time domain resource and frequency domain resource to be in a predetermined state.

In some embodiments, step S280 is further included: The MEES sends third information to the terminal device #1. The third information indicates that the terminal device #1 is allowed to perform data transmission.

In a possible implementation, when determining that the available continuous resource meets the data transmission requirement of the first service of the terminal device #1, in other words, finding that there is the available continuous resource at a current moment, in other words, the terminal device #1 may perform data transmission, the MEES may send the third information to the terminal device #1, to indicate that the terminal device #1 may perform data transmission.

It should be noted that, in this case, the actual data transmission moment calculated by the terminal device #1 may not arrive, but the MEES finds that there is a spare resource. In this case, the MEES notifies the terminal device #1 to start data transmission.

Step S290: The terminal sends a message #1 to the MEES. The message #1 is a data transmission start ACK message. The message may carry a parameter such as current signal quality.

It should be noted that, if the waiting duration $T'$ of the terminal device #1 arrives, in other words, a current moment is the data transmission moment calculated by the terminal device #1, or the waiting duration $T'$ of the terminal device #1 is exceeded, data transmission may also be triggered.

Step S291: Perform data transmission between the terminal and an application server.

Step S292: After data transmission is completed, the terminal device #1 may calculate a transmission speed of the current data transmission based on a size of data transmitted currently and total transmission duration.

Step S293: The terminal device #1 sends indication information #1 to the MEES. The indication information #1 is used by the terminal device #1 to notify the MEES to release a current bandwidth resource. The indication information #1 may further include parameters such as current signal transmission quality and an average rate of the current data transmission.

Step S294: The MEES sends a message #2 to the terminal. The message #2 is used by the MEES to acknowledge release of the bandwidth resource.

According to the method in this embodiment of this application, before performing data transmission, the terminal device may first request, from the MEES, whether data transmission can be performed, or request a resource for data transmission, and perform data transmission based on overall resource scheduling of the MEES. This ensures data transmission efficiency of the terminal, and may improve production efficiency in the industrial scenario.

Case 2:

If the MEES determines, based on the bandwidth resource currently in the system, the resource occupied by the terminal that is performing data transmission, and the amount of the data transmitted by the terminal device, that the resource currently in the system is sufficient for the terminal device to perform data transmission, the MEES immediately sends a response to the terminal device. The response carries $T$, and $T$ is set to 0.

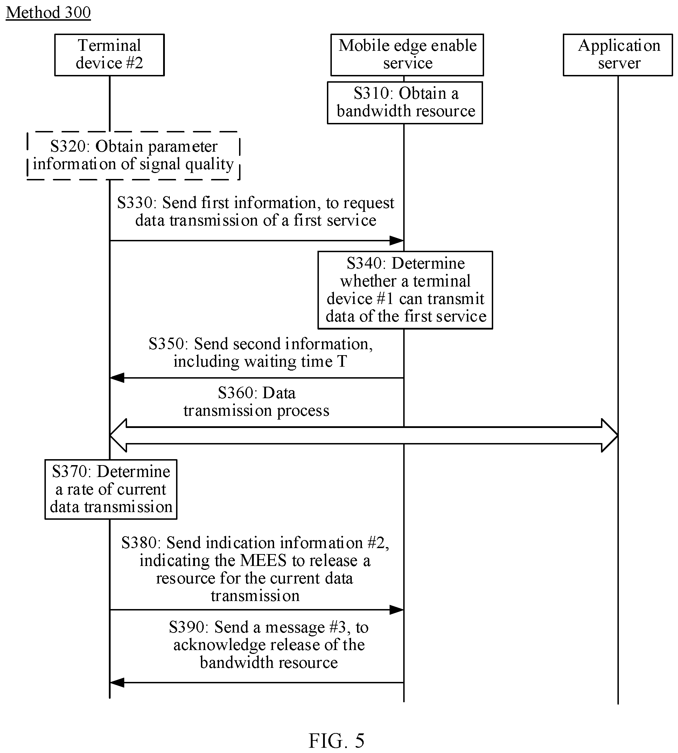

FIG. 5 shows a method 300. As shown in FIG. 5, the method includes steps 310 to 390. In this embodiment, a terminal device #2 is used as an example for description. The following describes each step in detail.

It should be noted that, for step 310 to step 330 in this embodiment, refer to step 210 to step 230 in the method 200 in FIG. 4.

Step S340: The MEES receives the request first information sent by the terminal, and determines waiting duration $T$ for the terminal device #2 to perform data transmission.

Step S350: The MEES sends second information to the terminal device #2. The second information includes the duration $T$ for which the terminal device #2 waits to perform data transmission.

In a possible implementation, the MEES sends the second information to the terminal device #2. The second information carries a parameter $T$, and the parameter $T$ is set to 0. This indicates that the MEES indicates that the terminal may perform data transmission at a current moment without queuing. The second information may further include parameters such as a moment T2 at which the MEES receives the second information sent by the terminal, and a moment T3 at which the MEES sends the second information.

Step S360: Perform data transmission between the terminal and an application server.

Step S370: After data transmission is completed, the terminal device #2 may calculate a transmission speed of the current data transmission task based on a size of data transmitted currently and total transmission duration.

Step S380: The terminal device #2 sends indication information #2 to the MEES. The indication information #2 is used by the terminal device #2 to notify the MEES to release a current bandwidth resource. The indication message #2 includes parameters such as current signal transmission quality and a current average transmission rate.

Step S390: The MEES sends a message #3 to the terminal. The message #3 is used by the MEES to acknowledge release of the bandwidth resource.

According to the method in this embodiment of this application, before performing data transmission, the terminal device may first request, from the MEES, whether data transmission can be performed, or request a resource for data transmission, and perform data transmission based on overall resource scheduling of the MEES. This ensures data transmission efficiency of the terminal, and may improve production efficiency in the industrial scenario.

It should be understood that sequence numbers of the processes do not mean an execution sequence in various embodiments of this application. The execution sequence of the processes should be determined based on functions and internal logic of the processes, and should not be construed as any limitation on implementation processes of embodiments of this application.

It should be understood that embodiments described in this application may be independent solutions, or may be combined based on internal logic. These solutions all fall within the protection scope of this application.

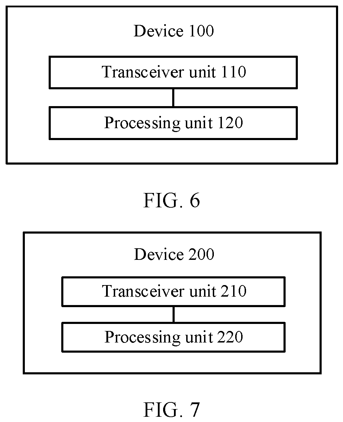

The radio resource scheduling method provided in embodiments of this application is described above in detail with reference to FIG. 3 to FIG. 5. A radio resource scheduling device provided in embodiments of this application is described below in detail with reference to FIG. 6 and FIG. 7. It should be understood that descriptions of device embodiments correspond to the descriptions of the method embodiments. Therefore, for content that is not described in detail, refer to the foregoing method embodiments. For brevity, a part of content is not described again.

FIG. 6 is a schematic block diagram of a radio resource scheduling device 100 according to an embodiment of this application. As shown in the figure, the radio resource scheduling device 100 may include a transceiver unit 110 and a processing unit 120.

It should be understood that the radio resource scheduling device 100 may correspond to the first device in the method 100, the mobile edge enable service in the method 200, and mobile edge enable service in the method 300 according to embodiments of this application. The radio resource scheduling device 100 may include units configured to perform the methods performed by the first device in the method 100, the mobile edge enable service in the method 200, and mobile edge enable service in the method 300. In addition, the units and the foregoing other operations and/or functions of the radio resource scheduling device 100 are separately used to implement the corresponding procedures of the method 100, the method 200, and the method 300. It should be understood that a specific process in which the units perform the foregoing corresponding steps is described in detail in the foregoing method embodiments. For brevity, details are not described herein again.

In this embodiment of this application, the device 100 may include a processor and a transceiver. The processor is connected to the transceiver. Optionally, the device further includes a memory. The memory is connected to the processor. Optionally, the device further includes a bus system. The processor, the memory, and the transceiver may be connected via the bus system. The memory may be configured to store instructions. The processor is configured to execute the instructions stored in the memory, to control the transceiver to send information or a signal.

The processing unit in the device 100 shown in FIG. 6 may correspond to the processor, and the transceiver unit in the device 100 shown in FIG. 6 may correspond to the transceiver.

FIG. 7 is a schematic block diagram of a radio resource scheduling device 200 according to an embodiment of this application. As shown in the figure, the radio resource scheduling device 200 may include a transceiver unit 210 and a processing unit 220.

It should be understood that the radio resource scheduling device 200 may correspond to the second device in the method 100, the terminal device in the method 200, and the terminal device in the method 300 according to embodiments of this application. The radio resource scheduling device 200 may include units configured to perform the methods performed by the second device in the method 100, the terminal device in the method 200, and the terminal device in the method 300. In addition, the units and the foregoing other operations and/or functions of the radio resource scheduling device 100 are separately used to implement the corresponding procedures of the method 100, the method 200, and the method 300. It should be understood that a specific process in which the units perform the foregoing corresponding steps is described in detail in the foregoing method embodiments. For brevity, details are not described herein again.

In this embodiment of this application, the device 200 may include a processor and a transceiver. The processor is connected to the transceiver. Optionally, the device further includes a memory. The memory is connected to the processor. Optionally, the device further includes a bus system. The processor, the memory, and the transceiver may be connected via the bus system. The memory may be configured to store instructions. The processor is configured to execute the instructions stored in the memory, to control the transceiver to send information or a signal.

The processing unit in the device 200 shown in FIG. 7 may correspond to the processor, and the transceiver unit in the device 100 shown in FIG. 7 may correspond to the transceiver.

It should be noted that the "device" in this application may also be understood as an "apparatus".

According to the method provided in embodiments of this application, this application further provides a computer program product. The computer program product includes computer program code. When the computer program code is run on a computer, the computer is enabled to perform any one of the method 100, the method 200, and the method 300.

According to the method provided in embodiments of this application, this application further provides a computer-readable medium. The computer-readable medium stores program code. When the program code is run on a computer, the computer is enabled to perform any one of the method 100, the method 200, and the method 300.

According to the method provided in embodiments of this application, this application further provides a chip, including at least one processor and a communication interface. The communication interface is configured to receive a signal from another device other than the device and transmit the signal to the processor, or send a signal from the processor to another device other than the device. The processor is configured to implement the method 100, the method 200, and the method 300 by using a logic circuit or executing code instructions.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, device (apparatus), and unit, refer to a corresponding processes in the foregoing method embodiments. Details are not described herein again.

In the several embodiments provided in this application, it should be understood that the disclosed system, device (or apparatus), and method may be implemented in other manners. For example, the described device embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the functional units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A radio resource scheduling method, comprising:

   receiving, by a first device, first information from a second device, wherein the first information is used to request data transmission of a first service; and
   sending, by the first device, second information to the second device when an available continuous resource does not meet a data transmission requirement of the first service, wherein the second information comprises information about first time, the information about the first time indicates to perform data transmission of the first service after the first time, and the available continuous resource is a resource needed for continuously transmitting data that is of the first service and that is requested to be transmitted.

2. The method according to claim 1, wherein the first information comprises information about a size of data that is of the first service and that is transmitted by the second device and/or channel quality information, wherein
the channel quality information comprises at least one of the following: reference signal received quality, reference signal received power, or a signal to interference plus noise ratio.

3. The method according to claim 1 or 2, wherein the method further comprises:

   determining, by the first device, the available continuous resource; and
   determining, by the first device based on the available continuous resource and the first information, whether the data transmission requirement of the first service is met.

4. The method according to any one of claims 1 to 3, wherein the method further comprises:
determining, by the first device, the information about the first time based on a first parameter, wherein the first parameter comprises:
a rate of data transmitted by a third device and/or channel quality, wherein the third device comprises a device that is performing data transmission and/or a device that has waited for data transmission.

5. The method according to any one of claims 1 to 4, wherein the method further comprises:
sending, by the first device, third information to the second device when the available continuous resource meets the data transmission requirement of the first service, wherein the third information indicates that data transmission of the first service is allowed.

6. A radio resource scheduling method, comprising:

   sending, by a second device, first information to a first device, wherein the first information is used to request data transmission of a first service; and
   receiving, by the second device, second information from the first device, wherein the second information comprises information about first time, the information about the first time indicates to perform data transmission of the first service after the first time, and an available continuous resource is a resource needed for continuously transmitting data that is of the first service and that is requested to be transmitted.

7. The method according to claim 6, wherein the first information comprises information about a size of data transmitted by the second device and/or channel quality information, wherein
the channel quality information comprises at least one of the following: reference signal received quality, reference signal received power, or a signal to interference plus noise ratio.

8. The method according to claim 6 or 7, wherein the second device receives third information from the first device, wherein the third information indicates that data transmission of the first service is allowed.

9. A radio resource scheduling device, comprising a transceiver unit, wherein

   the transceiver unit is configured to receive first information, wherein the first information is used to request data transmission of a first service; and
   the transceiver unit is further configured to send second information to a second device when an available continuous resource does not meet a data transmission requirement of the first service, wherein the second information comprises information about first time, the information about the first time indicates to perform data transmission of the first service after the first time, and the available continuous resource is a resource needed for continuously transmitting data that is of the first service and that is requested to be transmitted.

10. The device according to claim 9, wherein the first information comprises information about a size of data transmitted by the second device and/or channel quality information, wherein
the channel quality information comprises at least one of the following: reference signal received quality, reference signal received power, or a signal to interference plus noise ratio.

11. The device according to claim 9 or 10, wherein the device further comprises a processing unit, wherein

   the processing unit is configured to determine the available continuous resource; and
   the processing unit is further configured to determine, based on the available continuous resource and the first information, whether the data transmission requirement of the first service is met.

12. The device according to any one of claims 9 to 11, wherein the processing unit is further configured to determine the information about the first time based on a first parameter, and the first parameter comprises:
a rate of data transmitted by a third device and/or channel quality, wherein the third device comprises a device that is performing data transmission and/or a device that has waited for data transmission.

13. The device according to any one of claims 9 to 12, wherein
the transceiver unit is configured to send third information to the second device when the available continuous resource meets the data transmission requirement of the first service, wherein the third information indicates that data transmission of the first service is allowed.

14. A radio resource scheduling device, comprising a transceiver unit, wherein

the transceiver unit is configured to send first information to a first device, wherein the first information is used to request data transmission of a first service; and
the transceiver unit is further configured to receive second information from the first device, wherein the second information comprises information about first time, the information about the first time indicates to perform data transmission of the first service after the first time, and an available continuous resource is a resource needed for continuously transmitting data that is of the first service and that is requested to be transmitted.

15. The device according to claim 14, wherein the first information comprises information about a size of data transmitted by the second device and/or channel quality information, wherein
the channel quality information comprises at least one of the following: reference signal received quality, reference signal received power, or a signal to interference plus noise ratio.

16. The device according to claim 14 or 15, wherein the transceiver unit is further configured to receive third information from the first device, wherein the third information indicates that data transmission of the first service is allowed.

17. A computer-readable storage medium, comprising a computer program, wherein when the computer program is run on a computer, the computer is enabled to perform the method according to any one of claims 1 to 5.

18. A computer-readable storage medium, comprising a computer program, wherein when the computer program is run on a computer, the computer is enabled to perform the method according to any one of claims 6 to 8.

19. A computer program product, wherein the computer program product comprises a computer program; and when the computer program is run, a computer is enabled to perform the method according to any one of claims 1 to 5.

20. A computer program product, wherein the computer program product comprises a computer program; and when the computer program is run, a computer is enabled to perform the method according to any one of claims 6 to 8.

21. A chip system, comprising:
a processor, configured to invoke a computer program from a memory and run the computer program, to enable a device on which the chip system is installed to perform the method according to any one of claims 1 to 5.

22. A chip system, comprising:
a processor, configured to invoke a computer program from a memory and run the computer program, to enable a device on which the chip system is installed to perform the method according to any one of claims 6 to 8.

23. A radio resource scheduling system, comprising a first device configured to perform the method according to any one of claims 1 to 5 and a second device configured to communicate with the first device.

Industrial
terminal device

Client

Communication
module

Data
transmission
process

Application
server

Access device

FIG. 1

5G industrial
terminal device

Mobile edge
computing

Client

Communication
module

Data transmission process

Transmission data resource
applying process

Application
server

Mobile edge
enable service

FIG. 2

Method 100

| A first device receives first information from a second device, where the first information is used to request data transmission of a first service | S110 |

| The first device sends second information to the second device when an available continuous resource does not meet a data transmission requirement of the first service, where the second information includes information about first time, and the information about the first time indicates to perform data transmission of the first service after the first time | S120 |

FIG. 3

Method 200

| Terminal device #1 | Mobile edge enable service | Application server |

S210: Obtain bandwidth resource information

S220: Obtain parameter information of signal quality

S230: Send first information, to request data transmission of a first service

S240: Determine whether the terminal device #1 can transmit data of the first service

S250: Send second information, including waiting time T

S260: Determine local actual waiting time T'

S270: Resource scheduling

S280: Send third information, indicating that the terminal device #1 is allowed to perform data transmission

S290: Send a message #1, namely, a data transmission start ACK message

S291: Data transmission process

S292: Determine a rate of current data transmission

S293: Send indication information #1, indicating the MEES to release a resource for the current data transmission

S294: Send a message #2, to acknowledge release of a bandwidth resource

FIG. 4

Method 300

```
┌──────────────┐          ┌──────────────────┐          ┌──────────────┐
│   Terminal   │          │ Mobile edge enable│          │ Application  │
│  device #2   │          │     service       │          │   server     │
└──────┬───────┘          └────────┬──────────┘          └──────┬───────┘
       │                  ┌─────────────────────┐                │
       │                  │ S310: Obtain a      │                │
       │                  │ bandwidth resource  │                │
       │                  └─────────────────────┘                │
  ┌ ─ ─┴─ ─ ─ ─ ─ ─ ─ ─ ┐                                        │
  │ S320: Obtain parameter│                                       │
  │information of signal  │                                       │
  │ quality               │                                       │
  └ ─ ─┬─ ─ ─ ─ ─ ─ ─ ─ ┘                                        │
       │  S330: Send first information, to request                │
       │         data transmission of a first service            │
       │─────────────────────────────────────────▶│              │
       │                ┌────────────────────────┐ │              │
       │                │ S340: Determine        │ │              │
       │                │ whether a terminal     │ │              │
       │                │ device #1 can transmit │ │              │
       │                │ data of the first serv.│ │              │
       │                └────────────────────────┘ │              │
       │  S350: Send second information,            │              │
       │         including waiting time T           │              │
       │◀─────────────────────────────────────────│              │
       │         S360: Data                         │              │
       │         transmission process               │              │
       │◀═════════════════════════════════════════╪═════════════▶│
  ┌────┴──────────┐                                 │              │
  │ S370: Determine│                                │              │
  │ a rate of current│                              │              │
  │ data transmission│                              │              │
  └────┬──────────┘                                 │              │
       │  S380: Send indication information #2,     │              │
       │   indicating the MEES to release a         │              │
       │   resource for the current data            │              │
       │   transmission                             │              │
       │─────────────────────────────────────────▶│              │
       │   S390: Send a message #3, to              │              │
       │   acknowledge release of the               │              │
       │   bandwidth resource                       │              │
       │◀─────────────────────────────────────────│              │
       │                                            │              │
```

FIG. 5

FIG. 6

FIG. 7

## INTERNATIONAL SEARCH REPORT

| International application No. |
|---|
| **PCT/CN2021/078152** |

**A. CLASSIFICATION OF SUBJECT MATTER**

H04W 16/10(2009.01)i; H04W 28/26(2009.01)i; H04W 72/12(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP: 可用, 空闲, 剩余, 使用, 占用, 连续, 带宽, 资源, 不足, 不够, 满足, 小于, 不大于, 指示, 通知, 响应, 答复, 回复, 等待, 延迟, 时间, 时长, 同时, 并行, 共享, available, idle, residual, continuous, band, resource, shortage, deficiency, indicate, inform, response, reply, delay, latency, wait, time

**C. DOCUMENTS CONSIDERED TO BE RELEVANT**

| Category* | Citation of document, with indication, where appropriate, of the relevant passages | Relevant to claim No. |
|---|---|---|
| X | CN 102461318 A (LG ELECTRONICS INC.) 16 May 2012 (2012-05-16)<br>description paragraphs [0150]-[0156], figure 19 | 1-23 |
| X | CN 108599997 A (BEIJING QIYI CENTURY SCIENCE & TECHNOLOGY CO., LTD.) 28 September 2018 (2018-09-28)<br>description, paragraphs [0065]-[0141] | 1-23 |
| A | CN 105323765 A (POTEVIO INFORMATION TECHNOLOGY CO., LTD.) 10 February 2016 (2016-02-10)<br>entire document | 1-23 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 July 2021** | **11 August 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/078152**

| Patent document cited in search report | | | Publication date (day/month/year) | Patent family member(s) | | | Publication date (day/month/year) |
|---|---|---|---|---|---|---|---|
| CN | 102461318 | A | 16 May 2012 | EP | 2422578 | A2 | 29 February 2012 |
| | | | | KR | 101629312 | B1 | 21 June 2016 |
| | | | | CN | 102461318 | B | 01 April 2015 |
| | | | | EP | 2422578 | A4 | 21 November 2012 |
| | | | | US | 2010313082 | A1 | 09 December 2010 |
| | | | | WO | 2010143875 | A2 | 16 December 2010 |
| | | | | KR | 20100132424 | A | 17 December 2010 |
| | | | | WO | 2010143875 | A3 | 24 February 2011 |
| | | | | EP | 2422578 | B1 | 17 August 2016 |
| | | | | US | 8416782 | B2 | 09 April 2013 |
| CN | 108599997 | A | 28 September 2018 | None | | | |
| CN | 105323765 | A | 10 February 2016 | CN | 105323765 | B | 23 November 2018 |

Form PCT/ISA/210 (patent family annex) (January 2015)